# EUROPÄISCHE PATENTSCHRIFT

(11) **EP 2 506 660 B1**
(45) Veröffentlichungstag und Bekanntmachung des Hinweises auf die Patenterteilung: **10.02.2016**
(21) Anmeldenummer: 11290159.0
(22) Anmeldetag: 31.03.2011
(51) Int. Cl.: H05B 3/50, B60H 1/22

(54) **Wärmeübertrager**
Heat exchanger
Caloporteur

(43) Veröffentlichungstag der Anmeldung: 03.10.2012
(73) Patentinhaber: Mahle Behr France Rouffach S.A.S, 68250 Rouffach (FR)
(72) Erfinder: Bauer, Marc, 68440 Habsheim (FR)
(74) Vertreter: Grauel, Andreas

(56) Entgegenhaltungen:
- DE-A1- 19 539 704
- DE-A1-102006 032 772
- DE-U1- 20 016 206
- JP-A- 1 266 015
- US-A1- 2004 252 986

## Beschreibung

Die Erfindung betrifft einen Wärmeübertrager gemäß dem Oberbegriff des Anspruches 1 und eine Kraftfahrzeugklimaanlage gemäß dem Oberbegriff des Anspruches 14.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird. Die Leiter sind als ausschließlich ebene Leiterbleche ausgebildet und zwischen zwei Leiterblechen als Leiterblechpaar sind die PTC-Elemente positioniert. Mehrere Leiterblechpaare sind übereinander angeordnet als Stapel und zwischen den Leiterblechpaaren sind Wellrippen befestigt. Dadurch sind in nachteiliger Weise eine große Anzahl an Leiterblechen erforderlich, was mit hohen Kosten bei der Herstellung und einem großen Gewicht verbunden ist.

Die US 4 327 282 zeigt einen Wärmeübertrager mit einem PTC-Heizelement. Mittels Kontaktplatten wird Strom durch das PTC-Heizelement geleitet und an den Kontaktplatten ist eine Isolierschicht angeordnet. Die Komponenten werden mittels eines U-förmigen Clipses zusammengehalten.

Aus der EP 1 768 458 A1 ist ein Wärme erzeugendes Element einer Heizvorrichtung zur Lufterwärmung bekannt, umfassend wenigstens ein PTC-Element und an gegenüberliegenden Seitenflächen des PTC-Elementes anliegende elektrische Leiterbahnen, wobei die beiden elektrischen Leiterbahnen außenseitig von einer nicht elektrisch leitenden Isolierschicht umgeben sind.

Die Aufgabe der vorliegenden Erfindung besteht deshalb darin, einen Wärmeübertrager und eine Kraftfahrzeugklimaanlage zur Verfügung zu stellen, bei dem die Wellrippen und Leiter einfach und preiswert hergestellt werden können und der Wärmeübertragers ein geringes Gewicht aufweist.

Diese Aufgabe wird gelöst mit einem Wärmeübertrager, umfassend wenigstens zwei elektrische Widerstandsheizelemente, insbesondere wenigstens zwei PTC-Elemente, wenigstens zwei mit den wenigstens zwei elektrischen Widerstandsheizelementen elektrisch leitend verbundene Leiter, insbesondere Leiterbleche, um elektrischen Strom durch die wenigstens zwei elektrischen Widerstandsheizelemente zu leiten und dadurch die elektrischen Widerstandsheizelemente zu erwärmen, wobei wenigstens zwei elektrische Widerstandsheizelemente übereinander in einer Stapelrichtung angeordnet sind und zwischen den wenigstens zwei elektrischen Widerstandsheizelementen in der Stapelrichtung wenigstens ein Leiter angeordnet ist. Die Stapelrichtung ist eine Richtung, in welcher die elektrischen Widerstandsheizelemente übereinander gestapelt sind. Aufgrund der Anordnung von wenigstens einem Leiter zwischen zwei elektrischen Widerstandsheizelementen in der Stapelrichtung kann eine Vielzahl von elektrischen Widerstandsheizelementen mit nur zwei Leitern übereinander in einer Stapelanordnung und beabstandet angeordnet sein.

Insbesondere sind zwischen je zwei elektrischen Widerstandsheizelementen in der Stapelrichtung zwei Leiter angeordnet und/oder die von den wenigstens zwei elektrischen Widerstandsheizelementen, insbesondere wenigstens zwei PTC-Elementen, aufgespannten fiktiven Ebenen im Wesentlichen senkrecht auf der Stapelrichtung stehen.

In einer weiteren Ausführungsform schneidet jede fiktive Gerade, welche wenigstens zwei elektrische Widerstandsheizelemente schneidet, insbesondere sämtliche elektrischen Widerstandsheizelemente schneidet, auch einen, vorzugsweise zwei, Leiter zwischen zwei elektrischen Widerstandsheizelementen.

In einer ergänzenden Ausgestaltung weisen die wenigstens zwei Leiter, insbesondere Leiterbleche, ebene Abschnitte und Biegungen auf und/oder die wenigstens zwei Leiter sind U-förmig, insbesondere mehrfach U-förmig, ausgebildet. Bei einer mehrfach U-förmigen Ausbildung der wenigstens zwei Leiter ist ein Leiter mehrfach in Richtung der Stapelrichtung oder der fiktiven Gerade U-förmig ausgebildet und eine Öffnung am U wechselt dabei abwechselnd in Richtung der Stapelrichtung oder der fiktiven Gerade.

Vorzugsweise liegen die elektrischen Widerstandsheizelemente an ersten ebenen Abschnitten auf den elektrischen Widerstandsheizelementen auf und/oder die Biegungen sind im Wesentlichen 90°-Biegungen. Im Wesentlichen 90°-Biegungen bedeutet dabei, dass die Biegungen mit einer Abweichung von weniger als 30°-, 20°-, 10°- oder 5°-Biegungen von 90° sind.

In einer Variante sind die ebenen ersten Abschnitte im Wesentlichen senkrecht zu der Stapelrichtung und/oder fiktiven Gerade ausgerichtet und/oder ebene zweite Abschnitte der Leiter sind im Wesentlichen parallel zu der Stapelrichtung und/oder der fiktiven Gerade ausgerichtet. Die ebenen ersten Abschnitt, d. h. eine von den ebenen ersten Abschnitten aufgespannte Ebene sind im Wesentlichen senkrecht zu der Stapelrichtung und/oder fiktiven Gerade ausgerichtet, d. h. sind mit einer Abweichung von weniger als 30°, 20°, 10° oder 5° senkrecht zu der Stapelrichtung und/oder der fiktiven Ebene ausgerichtet. Im Wesentlichen parallel zu der Stapelrichtung ausgerichtet bedeutet, dass die ebenen zweiten Abschnitte der Leiter, d. h. die von den ebenen zweiten Abschnitten aufgespannte Ebene mit einer Abweichung von weniger als 30°, 20°, 10° oder 5° parallel zu der Stapelrichtung und/oder der fiktiven Gerade ausgerichtet sind.

Zweckmäßig ist ein ebener zweiter Abschnitt mit je zwei Biegungen mit zwei ebenen ersten Abschnitten verbunden oder zwei ebene erste Abschnitte sind mit einem gekrümmten Abschnitt des Leiters miteinander verbunden. Zwei ebene erste Abschnitte können auch mit einem gekrümmten Abschnitt, z. B. einem Halbkreis des Leiters im Querschnitt, miteinander verbunden sein.

In einer weiteren Ausführungsform sind an wenigstens einem Leiter, insbesondere einteilig mit dem wenigstens einen Leiter, Wellrippen ausgebildet.

Insbesondere ist der wenigstens eine Leiter mit Öffnungen versehen, insbesondere sind die Öffnungen im Bereich der Wellrippen angeordnet, da die Wellrippen aus dem wenigstens einen Leiter ausgestanzt sind. Die Wellrippen sind aus dem wenigstens einen Leiter, insbesondere Leiterblechen ausgestanzt und dadurch einteilig mit dem wenigstens einen Leiter ausgebildet. Dadurch können die Wellrippen besonders einfach und preiswert hergestellt werden und es ist auch keine gesondert herzustellende Verbindung zwischen den Wellrippen und dem wenigstens einen Leiter erforderlich, weil beim Ausstanzen der Wellrippen aus dem wenigstens einen Leiter, insbesondere Leiterblech, ein Teil des Leiters nur gebogen wird und dadurch weiterhin eine Verbindung zwischen den durch Umformen hergestellten Wellrippen und dem übrigen Leiter besteht.

In einer weiteren Ausgestaltung umfasst der Wärmeübertrager nur zwei Leiter. Der Wärmeübertrager weist damit nur zwei Leiter auf, so dass mit nur zwei Leitern, insbesondere Leiterblechen, aufgrund deren Geometrie durch eine Vielzahl von elektrischen Widerstandsheizelementen elektrischen Strom geleitet wird. Dadurch ist es in vorteilhafter Weise nicht erforderlich, eine Vielzahl von elektrischen Leitern miteinander zu verbinden und die Herstellung des Wärmeübertragers ist dadurch besonders einfach und preiswert.

In einer ergänzenden Variante sind die wenigstens zwei elektrischen Widerstandsheizelemente mit den wenigstens zwei Leitern stoffschlüssig, insbesondere mit Kleben, verbunden.

In einer weiteren Variante ist der Wärmeübertrager mit wenigstens einem elektrischen Isolierelement versehen. Mit dem wenigstens einem elektrischen Isolierelement, z. B. einer Isolierplatte, können die mit elektrischen Strom beaufschlagten Leiter von der Umgebung elektrisch isoliert sein.

In einer weiteren Ausgestaltung umfasst der Wärmeübertrager einen Rahmen zur Halterung der wenigstens zwei Leiter mit den wenigstens zwei elektrischen Widerstandsheizelementen. Mit einem Rahmen, z. B. aus Kunststoff, kann der Wärmeübertrager mit den wenigstens zwei elektrischen Leitern und den wenigstens zwei elektrischen Widerstandsheizelementen an Gegenständen, z. B. einem Klimaanlagengehäuse befestigt sein.

Erfindungsgemäße Kraftfahrzeugklimaanlage umfasst die Kraftfahrzeugklimaanlage wenigstens einen Wärmeübertrager gemäß einem oder mehrerer der vorhergehenden Ansprüche.

Zweckmäßig umfasst die Kraftfahrzeugklimaanlage einen Luftfilter und/oder ein Gebläse und/oder einen Kältemittelverdampfer und/oder ein Klimaanlagengehäuse, insbesondere aus Kunststoff, und/oder einen Kanal zum Durchleiten von Luft.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage und
- Fig. 2: einen Schnitt eines Wärmeübertragers.

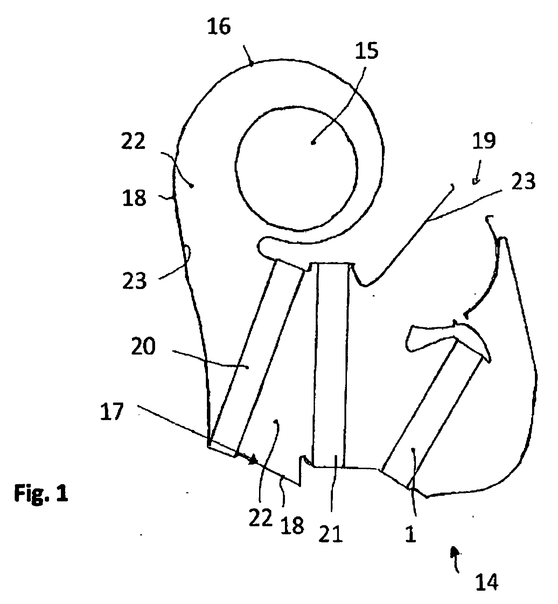

Fig. 1 zeigt eine Kraftfahrzeugklimaanlage 14. In einem Klimaanlagengehäuse 16 mit einer Bodenwandung 17 und einem Austrittsabschnitt 19 ist ein Gebläse 15, ein Luftfilter 20, ein Kältemittelverdampfer 21 und ein Wärmeübertrager 1 als eine elektrische Heizeinrichtung angeordnet. Das Klimaanlagengehäuse 16 bildet somit einen Kanal 22 zum Durchleiten der Luft. Gehäusewandungen 18 des Klimaanlagengehäuses 16 weisen an der Innenseite eine Oberfläche 23 auf, welche den Kanal 22 begrenzen. Die Luft für den Innenraum eines Kraftfahrzeuges wird mittels des Gebläses 15 durch den Luftfilter 20, den Kältemittelverdampfer 11 sowie den Wärmeübertrager 1 geleitet.

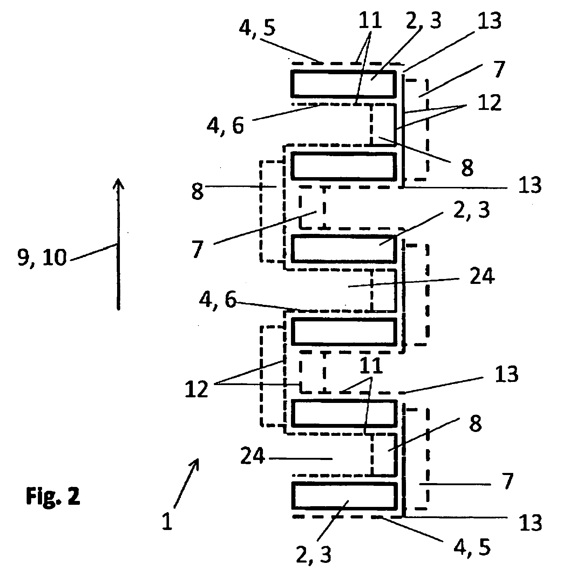

Der Wärmeübertrager 1 umfasst eine Vielzahl von als PTC-Elementen 3 ausgebildeten elektrischen Widerstandheizelementen 2. Die PTC-Elemente 3 sind zwischen einem ersten Leiterblech 5 und einem zweiten Leiterblech 6 als Leiter 4 angeordnet. Die Leiterbleche 5, 6 sind aus Metall, z. B. Aluminium ausgebildet. Die Geometrie des ersten und zweiten Leiterbleches 5, 6 ist dahingehend ausgebildet, dass die in einer Stapelrichtung 9 übereinander angeordneten PTC-Elemente 3 bei nur zwei Leiterblechen 5, 6 von diesen beiden Leiterblechen 5, 6 bestromt werden können und zwischen den PTC-Elementen 3 Zwischenräume 24 vorhanden sind. Die Zwischenräume 24 werden dabei abwechselnd von dem ersten Leiterblech 5 und dem zweiten Leiterblech 6 begrenzt. Die Stapelrichtung 9 und eine fiktive Gerade 10 sind dabei innerhalb der Zeichenebene von Fig. 2 angeordnet. Die fiktive Gerade 10, sofern diese parallel zu der Darstellung von Fig. 2 verschoben wird, schneidet die PTC-Elemente 3, insbesondere sämtliche elektrischen Widerstandsheizelemente 2, und schneidet auch zwischen zwei PTC-Elementen 3 zwei Leiterbleche 5, 6, d. h. abwechselnd ein erstes Leiterblech 5 und ein zweites Leiterblech 6.

Das erste und zweite Leiterblech 5, 6 umfasst erste ebene Abschnitte 11, welche auf den PTC-Elementen 3 aufliegen und zweite ebene Abschnitte 12, welche zwei erste Abschnitte 11 miteinander verbinden. Die zweiten ebenen Abschnitte 12 sind dabei parallel zu der Stapelrichtung 9 ausgerichtet und die ersten ebenen Abschnitte 11 sind senkrecht zu der Stapelrichtung 9 ausgerichtet. Mit einer Biegung 13 von 90° sind die ersten und zweiten ebenen Abschnitte 11, 12 miteinander verbunden (Fig. 2). Das erste und zweite Leiterblech 5, 6 ist damit mehrfach U-förmig ausgebildet. An dem zweiten ebenen Abschnitt 12 sowohl des ersten Leiterbleches 5 als auch des zweiten Leiterbleches 6 sind am ersten Leiterblech 5 erste Wellrippen 7 aus dem zweiten ebenen Abschnitt 12 ausgestanzt und aus dem zweiten Leiterblech 6 an dem zweiten ebenen Abschnitt 12 sind zweite Wellrippen 8 ausgestanzt. Die ersten und zweiten Wellrippen 7, 8 erhöhen die Oberfläche zur Übertragung von Wärme von dem ersten und zweiten Leiterblech 5, 6 bzw. der ersten und zweiten Wellrippen 7, 8 auf die um den Wärmeübertrage 1 um- und durchgeleiteten Luft. An den zweiten ebenen Abschnitten 12 sowohl des ersten als auch des zweiten Leiterbleches 5, 6 entstehen aufgrund des Ausstanzens der Wellrippen 7, 8 aus den zweiten ebenen Abschnitten 12 in Fig. 2 nicht dargestellte Öffnungen. Durch diese Öffnungen kann somit die Luft senkrecht zu der fiktiven Gerade durch die Zwischenräume 24 und anschließend durch die nicht dargestellten Öffnungen in den zweiten ebenen Abschnitten 12 geleitet werden.

Das erste und zweite Leiterblech 5, 6 sowie die PTC-Elemente 3 sind stoffschlüssig mittels Klebstoff miteinander verbunden. Bei der Herstellung des Wärmeübertragers 1 werden in die Zwischenräume 24 nicht dargestellte Abstandshalter eingebracht und anschließend wird auf das oberste und unterste PTC-Element 3 eine Druckkraft in Richtung der fiktiven Gerade 10 dahingehend aufgebracht, so dass die beiden ersten ebenen Abschnitte 11 auf den PTC-Elementen 3 aufgepresst werden und dadurch eine gute Klebeverbindung zwischen den PTC-Elementen 3 und den ersten ebenen Abschnitten 11 hergestellt werden kann. Nach dem Erhärten des Klebstoffes werden die nicht dargestellten Abstandshalter wieder aus den Zwischenräumen 24 entfernt.

Insgesamt betrachtet sind mit dem erfindungsgemäßen Wärmeübertrager 1 wesentliche Vorteile verbunden. Der Wärmeübertrager 1 umfasst nur zwei Leiterbleche 5, 6 mit denen durch eine Velzahl von PTC-Elementen 3 elektrischer Strom geleitet werden kann. Dadurch können bei der Herstellung Kosten eingespart werden, weil nur zwei Leiterbleche 5, 6 erforderlich sind und eine in der Anordnung kompakte Bauweise des Wärmeübertragers 1 möglich ist, weil die PTC-Elemente 3 übereinander in Stapelrichtung 9 angeordnet sind.

### Bezugszeichenliste

- 1: Wärmeübertrager
- 2: Elektrisches Widerstandsheizelement
- 3: PTC-Element
- 4: Leiter
- 5: Erstes Leiterblech
- 6: Zweites Leiterblech
- 7: Erste Wellrippe
- 8: Zweite Wellrippe
- 9: Stapelrichtung
- 10: Fiktive Gerade
- 11: Erste ebene Abschnitt
- 12: Zweite ebene Abschnitt
- 13: Biegung
- 14: Kraftfahrzeugklimaanlage
- 15: Gebläse
- 16: Klimaanlagengehäuse
- 17: Bodenwandung
- 18: Gehäusewandung
- 19: Austrittsabschnitt
- 20: Luftfilter
- 21: Kältemittelverdampfer
- 22: Kanal
- 23: Oberfläche
- 24: Zwischenraum

## Patentansprüche

1. Wärmeübertragers (1), umfassend
- wenigstens zwei elektrische Widerstandsheizelemente (2),
- wenigstens zwei mit den wenigstens zwei elektrischen Widerstandsheizelementen (2) elektrisch leitend verbundene Leiter (4), als Leiterbleche (5, 6), um elektrischen Strom durch die wenigstens zwei elektrischen Widerstandsheizelemente (2) zu leiten und dadurch die elektrischen Widerstandsheizelemente (2) zu erwärmen,
**dadurch gekennzeichnet, dass**
wenigstens zwei elektrische Widerstandsheizelemente (2) übereinander in einer Stapelrichtung (9) angeordnet sind und zwischen den wenigstens zwei elektrischen Widerstandsheizelementen (2) in der Stapelrichtung (9) wenigstens ein Leiter (4) angeordnet ist.

2. Wärmeübertrager nach Anspruch 1, **dadurch gekennzeichnet, dass** zwischen je zwei elektrischen Widerstandsheizelementen (2) in der Stapelrichtung (9) zwei Leiter (4) angeordnet sind und/oder die von den wenigstens zwei elektrischen Widerstandsheizelementen (2), insbesondere wenigstens zwei PTC-Elementen (3), aufgespannten fiktiven Ebenen im Wesentlichen senkrecht auf der Staperrichtung (9) stehen.

3. Wärmeübertrager nach Anspruch 1 oder 2, **dadurch gekennzeichnet, dass** jede fiktive Gerade (10), welche wenigstens zwei elektrische Widerstandsheizelemente (2), insbesondere sämtliche elektrischen Widerstandsheizelemente (2), schneidet, auch einen, vorzugsweise zwei, Leiter (4) zwischen zwei elektrischen Widerstandsheizelementen (2) schneidet.

4. Wärmeübertrager nach einem oder mehreren der vorhergehenden Ansprüche, **dadurch gekennzeichnet, dass** die wenigstens zwei Leiter (4), insbesondere Leiterbleche (5, 6), ebene Abschnitte (11, 12) und Biegungen (13) aufweisen und/oder die wenigstens zwei Leiter (4) U-förmig, insbesondere mehrfach U-förmig, ausgebildet sind.

5. Wärmeübertrager nach Anspruch 4, **dadurch gekennzeichnet, dass** die elektrischen Widerstandsheizelemente (2) an ersten ebenen Abschnitten (11) auf den elektrischen Widerstandsheizelementen (2) aufliegen und/oder die Biegungen (13) im Wesentlichen 90°- Biegungen sind.

6. Wärmeübertrager nach Anspruch 4 oder 5, **dadurch gekennzeichnet, dass** die ebenen ersten Abschnitte (11) im Wesentlichen senkrecht zu der Stapelrichtung (9) und/oder fiktiven Gerade (10) ausgerichtet sind und/oder ebene zweite Abschnitte (12) der Leiter (4) im Wesentlichen parallel zu der Stapelrichtung (9) und/oder der fiktiven Gerade (10) ausgerichtet sind.

7. Wärmeübertrager nach Anspruch 6, **dadurch gekennzeichnet, dass** ein ebener zweiter Abschnitt (12) mit je zwei Biegungen (13) mit zwei ebenen ersten Abschnitten (11) verbunden ist oder zwei ebene erste Abschnitte (11) mit einem gekrümmten Abschnitt des Leiters (4) miteinander verbunden sind.

8. Wärmeübertrager nach einem oder mehreren der vorhergehenden Ansprüche, **dadurch gekennzeichnet, dass** an wenigstens einem Leiter (4), insbesondere einteilig mit dem wenigstens einen Leiter (4), Wellrippen (7, 8) ausgebildet sind.

9. Wärmeübertrager nach Anspruch 8, **dadurch gekennzeichnet, dass** der wenigstens eine Leiter (4) mit Öffnungen versehen ist, insbesondere die Öffnungen im Bereich der Wellrippen (7, 8) angeordnet sind, da die Wellrippen (7, 8) aus dem wenigstens einen Leiter (4) ausgestanzt sind.

10. Wärmeübertrager nach einem oder mehreren der vorhergehenden Ansprüche, **dadurch gekennzeichnet, dass** der Wärmeübertrager (1) nur zwei Leiter (4) umfasst.

11. Wärmeübertrager nach einem oder mehreren der vorhergehenden Ansprüchen, **dadurch gekennzeichnet, dass** die wenigstens zwei elektrischen Widerstandsheizelemente (2) mit den wenigstens zwei Leitern (4) stoffschlüssig, insbesondere mit Kleben, verbunden sind.

12. Wärmeübertrager nach einem oder mehreren der vorhergehenden Ansprüche, **dadurch gekennzeichnet, dass** der Wärmeübertrager (1) mit wenigstens einem elektrischen Isolierelement versehen ist.

13. Wärmeübertrager nach einem oder mehreren der vorhergehenden Ansprüchen, **dadurch gekennzeichnet, dass** der Wärmeübertrager (1) einen Rahmen zur Halterung der wenigstens zwei Leiter (4) mit den wenigstens zwei elektrischen Widerstandsheizelementen (2) umfasst.

14. Kraftfahrzeugklimaanlage, **dadurch gekennzeichnet, dass** die Kraftfahrzeugklimaanlage wenigstens einen Wärmeübertrager (1) gemäß einem oder mehrerer der vorhergehenden Ansprüche umfasst.

15. Kraftfahrzeugklimaanlage nach Anspruch 14, **dadurch gekennzeichnet, dass** die Kraftfahrzeugklimaanlage (14) einen Luftfilter (20) und/oder ein Gebläse (15) und/oder einen Kältemittelverdampfer (21) und/oder ein Klimaanlagengehäuse (16), insbesondere aus Kunststoff, und/oder einen Kanal (22) zum Durchleiten von Luft umfasst.

## Claims

1. A heat exchanger (1), comprising
- at least two electrical resistance heating elements (2),
- at least two conductors (4), as conductor plates (5, 6), which are electrically conductively connected to the at least two electrical resistance heating elements (2) for conducting electric current through the at least two electrical resistance heating elements (2) and thereby heating the electrical resistance heating elements (2),
**characterised in that**
at least two electrical resistance heating elements (2) are arranged one above the other in a stacking direction (9) and **in that** at least one conductor (4) is arranged between the at least two electrical resistance heating elements (2) in the stacking direction (9).

2. The heat exchanger according to claim 1, **characterised in that** two conductors (4) are arranged between two respective electrical resistance heating elements (2) in the stacking direction (9) and/or the notional planes spanned by the at least two electrical resistance heating elements (2), in particular at least two PTC elements (3), stand substantially perpendicular to the stacking direction (9).

3. The heat exchanger according to claim 1 or 2, **characterised in that** each notional straight line (10) which intersects at least two electrical resistance heating elements (2), in particular all electrical resistance heating elements (2), also intersects one, preferably two conductors (4) between two electrical resistance heating elements (2).

4. The heat exchanger according to one or more of the preceding claims, **characterised in that** the at least two conductors (4), in particular conductor plates (5, 6), have planar sections (11, 12) and bends (13) and/or the at least two conductors (4) are U-shaped, in particular multiply U-shaped.

5. The heat exchanger according to claim 4, **characterised in that** the electrical resistance heating elements (2) on first planar sections (11) bear on the electrical resistance heating elements (2) and/or the bends (13) are substantially 90° bends.

6. The heat exchanger according to claim 4 or 5, **characterised in that** the planar first sections (11) are aligned substantially perpendicular to the stacking direction (9) and/or the notional straight line (10) and/or planar second sections (12) of the conductors (4) are aligned substantially parallel to the stacking direction (9) and/or the notional straight line (10).

7. The heat exchanger according to claim 6, **characterised in that** a planar second section (12) with two bends (13) each is connected to two planar first sections (11) or two planar first sections (11) with a curved section of the conductor (4) are connected with one another.

8. The heat exchanger according to one or more of the preceding claims, **characterised in that** corrugated fins (7, 8) are formed on at least one conductor (4), in particular as one piece with the at least one conductor (4).

9. The heat exchanger according to claim 8, **characterised in that** the at least one conductor (4) is provided with apertures, in particular the apertures are arranged in the area of the corrugated fins (7, 8) as the corrugated fins (7, 8) are cut out from the at least one conductor (4).

10. The heat exchanger according to one or more of the preceding claims, **characterised in that** the heat exchanger (1) only comprises two conductors (4).

11. The heat exchanger according to one or more of the preceding claims, **characterised in that** the at least two electrical resistance heating elements (2) are cohesively connected to the at least two conductors (4), in particular with adhesives.

12. The heat exchanger according to one or more of the preceding claims, **characterised in that** the heat exchanger (1) is provided with at least one electrical insulating element.

13. The heat exchanger according to one or more of the preceding claims, **characterised in that** the heat exchanger (1) comprises a frame for holding the at least two conductors (4) with the at least two electrical resistance heating elements (2).

14. A motor vehicle air conditioning system, **characterised in that** the motor vehicle air conditioning system comprises at least one heat exchanger (1) according to one or more of the preceding claims.

15. The motor vehicle air conditioning system according to claim 14, **characterised in that** the motor vehicle air conditioning system (14) comprises an air filter (20) and/or a fan (15) and/or a refrigerant evaporator (21) and/or an air conditioning housing (16), in particular made of plastic, and/or a channel (22) for the passage of air.

## Revendications

1. Echangeur de chaleur (1) comprenant
- au moins deux éléments chauffants à résistance électrique (2),
- au moins deux conducteurs (4), en tant que tôles conductrices (5, 6) reliés de manière électroconductrice aux éléments chauffants à résistance électrique (2) au moins au nombre de deux, pour faire passer le courant électrique à travers les éléments chauffants à résistance électrique (2) au moins au nombre de deux et, de ce fait, chauffer les éléments chauffants à résistance électrique (2),
**caractérisé**
**en ce qu'**au moins deux éléments chauffants à résistance électrique (2) sont disposés l'un au-dessus de l'autre suivant une direction d'empilage (9), et au moins un conducteur (4) est disposé, dans la direction d'empilage (9), entre les deux éléments chauffants à résistance électrique (2) au moins au nombre de deux.

2. Echangeur de chaleur selon la revendication 1, **caractérisé en ce que** deux conducteurs (4) sont disposés à chaque fois, dans la direction d'empilage (9), entre deux éléments chauffants à résistance électrique (2), et / ou les plans fictifs formés par les éléments chauffants à résistance électrique (2) au moins au nombre de deux, en particulier au moins deux éléments CTP (3), sont pratiquement perpendiculaires à la direction d'empilage (9).

3. Echangeur de chaleur selon la revendication 1 ou 2, **caractérisé en ce que** chaque droite fictive (10) qui coupe au moins deux éléments chauffants à résistance électrique (2), en particulier tous les éléments chauffants à résistance électrique (2), coupe aussi un conducteur (4), de préférence deux, entre deux éléments chauffants à résistance électrique (2).

4. Echangeur de chaleur selon l'une quelconque ou plusieurs des revendications précédentes, **caractérisé en ce que** les conducteurs (4) au moins au nombre de deux, en particulier des tôles conductrices (5, 6), présentent des parties planes (11, 12) et des courbures (13) et / ou les conducteurs (4) au moins au nombre de deux sont configurés en forme de U, en particulier plusieurs fois en forme de U.

5. Echangeur de chaleur selon la revendication 4, **caractérisé en ce que** les éléments chauffants à résistance électrique (2) sont en appui sur des premières parties planes (11) situées sur les éléments chauffants à résistance électrique (2) et / ou les courbures (13) sont des courbures pratiquement à 90°.

6. Echangeur de chaleur selon la revendication 4 ou 5, **caractérisé en ce que** les premières parties planes (11) sont orientées pratiquement de façon perpendiculaire à la direction d'empilage (9) et / ou à la droite fictive (10), et / ou des deuxièmes parties planes (12) des conducteurs (4) sont orientées pratiquement de façon parallèle à la direction d'empilage (9) et / ou à la droite fictive (10).

7. Echangeur de chaleur selon la revendication 6, **caractérisé en ce qu'**une deuxième partie plane (12) comprenant à chaque fois deux courbures (13) est reliée à deux premières parties planes (11), ou bien deux premières parties planes (11) comportant une partie recourbée du conducteur (4) sont reliées l'une à l'autre.

8. Echangeur de chaleur selon l'une quelconque ou plusieurs des revendications précédentes, **caractérisé en ce que** des ailettes ondulées (7, 8) sont configurées sur au moins un conducteur (4), en particulier en formant un seul et même élément avec le conducteur (4) au moins au nombre de un.

9. Echangeur de chaleur selon la revendication 8, **caractérisé en ce que** le conducteur (4) au moins au nombre de un est doté d'ouvertures, en particulier les ouvertures sont disposées dans la zone des ailettes ondulées (7, 8), étant donné que les ailettes ondulées (7, 8) sont découpées à partir du conducteur (4) au moins au nombre de un.

10. Echangeur de chaleur selon l'une quelconque ou plusieurs des revendications précédentes, **caractérisé en ce que** l'échangeur de chaleur (1) comprend seulement deux conducteurs (4).

11. Echangeur de chaleur selon l'une quelconque ou plusieurs des revendications précédentes, **caractérisé en ce que** les éléments chauffants à résistance électrique (2) au moins au nombre de deux sont assemblés par continuité de matière, en particulier par collage, avec les conducteurs (4) au moins au nombre de deux.

12. Echangeur de chaleur selon l'une quelconque ou plusieurs des revendications précédentes, **caractérisé en ce que** l'échangeur de chaleur (1) est doté d'au moins un élément isolant électrique.

13. Echangeur de chaleur selon l'une quelconque ou plusieurs des revendications précédentes, **caractérisé en ce que** l'échangeur de chaleur (1) comprend un cadre servant à la fixation des conducteurs (4) au moins au nombre de deux, avec les éléments chauffants à résistance électrique (2) au moins au nombre de deux.

14. Système de climatisation d'un véhicule automobile, **caractérisé en ce que** le système de climatisation du véhicule automobile comprend au moins un échangeur de chaleur (1) selon l'une quelconque ou plusieurs des revendications précédentes.

15. Système de climatisation d'un véhicule automobile selon la revendication 14, **caractérisé en ce que** le système de climatisation du véhicule automobile (14) comprend un filtre à air (20) et / ou un pulseur (15) et / ou un évaporateur de fluide frigorigène (21) et / ou un carter de système de climatisation (16), en particulier en matière plastique, et / ou un conduit (22) servant au passage de l'air.
